# DEMANDE DE BREVET EUROPEEN

(11) **EP 0 528 077 A1**
(43) Date de publication de la demande: **24.02.1993**
(21) Numéro de dépôt: 91202126.8
(22) Date de dépôt: 20.08.1991
(51) Int. Cl.: G01S 13/86

(54) **Système radar aéroporté muni d'une caméra pour poursuivre objets volants à basse altitude**

(71) Demandeur: SELBOURNE LIMITED, Dublin 2 (IE)
(72) Inventeur: Clausem Bernard, CH-1211 Genève 17 (CH); Guisy, Roland, CH-1211 Genève 17 (CH)
(74) Mandataire: Thibon-Littaye, Annick

(57) **Abrégé**

La présente invention concerne un système automatique de surveillance d'un espace aérien à proximité d'un site terrestre, caractérisé en ce qu'il comporte :
- un dispositif radar (1) associé à un dispositif de traitement (7) propre à éliminer les échos fixes par comparaison de la position des échos détectés lors d'un balayage courant par rapport à leur position lors d'un balayage précédent ;
- des moyens de prise de vue (11) mobiles en rotation et en inclinaison, commandés par une unité centrale de commande (10) en fonction des informations délivrées par le dispositif de traitement (7) pour assurer un suivi image d'une forme mobile détectée par le dispositif radar (1)..

## Description

La présente invention concerne un système automatique de surveillance d'un espace aérien pour la sécurité de sites terrestres, que ce soit bien entendu sur le sol ferme ou sur mers.

Elle s'applique plus particulièrement à la surveillance par la détection d'objets volants tels que planeurs, petits avions, aérostats, parachutistes, ultralégers motorisés, delta-planes... qui sont difficilement détectables par les moyens classiques, soit en raison de leur faible masse métallique et/ou de leur évolution à basse altitude et/ou de leur faible vitesse.

Tous les engins volants sont difficiles à détecter lorsqu'ils évoluent à proximité du sol car la terre est ronde et imperméable aux rayonnements radar. Ceci implique actuellement qu'il faut surélever les antennes radar si l'on veut porter loin et éliminer les très gros échos terrestres pour ne laisser apparaître que les échos de cibles recherchées.

De tels systèmes existent sous la forme d' avions spécialisés, connus par exemple sous la dénomination commerciale AWACS. Ces avions utilisent l'effet DOPPLER pour mettre en évidence les objets mobiles par rapport au fond terrestre immobile en utilisant le principe qu'une onde radar réfléchie par un objet mobile est différente, en fréquence ou en phase, d'une onde radar réfléchie par un objet statique. Néanmoins, de tels systèmes ne permettent pas de détecter des objets évoluant à faible vitesse. En effet, ils sont obligés de supprimer les échos de faible vitesse pour ne pas être saturés par tous les objets roulants au sol à l'intérieur de leur surface de détection. En outre, leur fréquence radar les rend inaptes à détecter, même en effet DOPPLER, les objets dits "furtifs" dont la signature radar est particulièrement faible ou les formes amagnétiques.

D'autres systèmes de détection font appel à une détection acoustique propre à repérer le passage d'un avion ou d'un hélicoptère, mais impropre à détecter des objets volants, à faible bruit, tels que les planeurs, parachutistes...

On voit donc que de tels objets sont quasi indétectables autrement que par une surveillance visuelle sur les sites à protéger, ce qui présente l'inconvénient d'apporter une détection très limitée en distance et donc tardive, ne permettant pas, en cas d'alerte, une réponse appropriée et à temps par rapport à l'apparition du danger.

De tels sites peuvent être actuellement protégés contre la venue d'objets terrestres par des systèmes de vidéo-surveillance qui nécessitent un grand nombre de caméras pour couvrir tous les accès ou tous les côtés du site et qui ne peuvent être utilisés pour la détection de formes arrivant par les airs. En effet, même si certains systèmes prévoient une orientation possible des organes de prise de vue, cela ne permet pas, en raison du trop grand nombre nécessaire et de la faible portée de ces organes, d'assurer valablement la surveillance du site contre des formes venant du ciel.

La présente invention a donc pour but de proposer un système de détection pour la surveillance de sites terrestres qui ne soit plus tributaire de l'attention de l'homme et qui assure une bonne sécurité en détectant tout type de formes mobiles se présentant dans sa zone de couverture.

Un autre but de la présente invention est de simplifier cette opération de surveillance en permettant une identification automatique de la forme détectée et un suivi de son évolution.

Selon sa caractéristique principale, la présente invention concerne un système automatique de surveillance de l'espace aérien à proximité d'un site terrestre, caractérisé en ce qu'il comporte :
- un dispositif radar associé à un dispositif de traitement propre, notamment, à éliminer les échos fixes ;
- des moyens de prise de vue, mobiles en rotation et en inclinaison, commandés par une unité centrale de commande en fonction des informations délivrées par le dispositif de traitement.

Le principe de fonctionnement du système selon l'invention consiste dans un état de veille, à faire effectuer au dispositif radar un balayage de la zone de couverture, le dispositif de traitement étant en fonction pour supprimer les échos fixes, c'est-à-dire que lors d'un premier balayage, il prend en compte et mémorise tous les objets de la zone et lors d'un deuxième balayage, il effectue une comparaison des échos et ne conserve que ceux qui ont varié par rapport au premier balayage en utilisant notamment le mode vidéo.

Dès qu'une forme mobile est détectée dans la zone de couverture, le système passe en mode détection, le dispositif de traitement transmet alors un plot sur un écran radar d'une unité de visualisation en même temps qu'il déclenche l'unité centrale de commande des moyens de prise de vue en lui transmettant les coordonnées spatiales de l'objet détecté, faisant ainsi passer le système dans un mode d'orientation et de poursuite.

L'unité centrale de commande intervient sur le dispositif de prise de vue pour placer son objectif sur les coordonnées transmises par le dispositif de traitement. Une fois que l'objet est dans le champ du dispositif de prise de vue, celui-ci effectue un zoom sur l'objet pour le reporter sur un écran de visualisation.

L'unité centrale de commande comporte des moyens propres à assurer le suivi de l'objet se déplaçant par le dispositif de prise de vue, de sorte à obtenir un asservissement de sa position sur l'objet à suivre.

Au cas où l'objet est perdu au cours de l' asservissement, ses nouvelles coordonnées sont immédiatement retransmises par le dispositif radar.

Le dispositif radar est constitué principalement d'une tête radar montée sur un châssis, de moteurs permettant l'orientation de la tête radar et d'une interface fibre optique permettant la transmission des signaux vers le dispositif de traitement.

La tête radar selon l'invention est du type DOPPLER travaillant en mode "CWFM", c'est-à-dire que la tête radar émet une onde continue qui est modulée en fréquence.

La tête radar est dimensionnée dans ses caractéristiques de sorte à émettre dans une bande de fréquence où la présence d'eau est détectée, de façon à déceler des formes amagnétiques ne contenant pas ou très peu d'objets métalliques tels que des parachutistes par exemple.

Selon un mode particulier de réalisation, on fixe une bande de fréquence de 9,75 à 10 GHz.

On tire ainsi profit de ce qui est considéré comme un inconvénient dans les systèmes radars classiques car cela conduit à ne plus avoir de sélectivité dans la détection. Cette sélectivité est obtenue dans le système selon l'invention en éliminant les échos fixes.

Par ailleurs, la tête radar selon l'invention est de portée limitée dans la mesure où le but ici n'est pas d'obtenir une couverture à grande distance, mais d'obtenir une bonne détection d'objets pénétrant dans un volume de protection d'un site terrestre.

Ce volume est défini par le lobe d'émission du radar. On peut considérer qu'un lobe de diamètre au sol compris entre 1 et 20 km et de 1 à 5 km de hauteur répond au but recherché.

Le principe de fonctionnement du dispositif radar selon l'invention est le suivant : un mixeur assure le mélange du signal d'émission et du signal d'écho. La fréquence du signal radar, issue de ce mélange est la différence de fréquence du signal local (d'émission) et de l'écho. La fréquence de l'émetteur varie linéairement avec le temps. Le signal d'écho est en retard par rapport au signal de l'émetteur. A un instant donné, l'écart de fréquence, donc la fréquence du signal radar est proportionnelle à la distance séparant la tête radar de la cible ou objet détecté.

S'agissant d'un dispositif radar utilisant l'effet DOPPLER, on dispose également de la fréquence du signal DOPPLER, porteur de l'information vitesse de la cible.

De manière particulièrement avantageuse, l'unité centrale de commande comporte un dispositif de reconnaissance de formes, propre à comparer les images issues des moyens de prise de vue par rapport à des formes préenregistrées dans une banque de données de manière à permettre une identification automatique de l'objet détecté et à transmettre à l'unité de visualisation, non seulement les images issues des moyens de prise de vue sur un écran de visualisation, mais également une indication de la nature de l'objet détecté.

Le système selon l'invention est ainsi automatiquement capable d'éliminer des objets détectés considérés comme sans danger tels que des oiseaux, sans déclencher intempestivement des moyens d'alarme.

Lors d'une phase d'identification, l'unité centrale de commande détermine, en fonction des indications transmises à la fois par le dispositif radar et les moyens de prise de vue, le type d'objet détecté, sa masse et/ou sa taille, sa vitesse et son sens de déplacement.

La suppression des échos fixes s'effectuant selon des critères de déplacements relatifs des formes, le système selon l'invention ne prend pas en compte des objets oscillants sous l'effet du vent comme par exemple des arbres.

Un tel mode d'élimination des échos fixes permet, en outre, de détecter des formes se déplaçant derrière des objets fixes, ou considérés comme tels, dans la direction incidente du système.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :
La figure 1 représente schématiquement sous forme de synoptique les principaux éléments d'un système de surveillance selon l'invention ;
Les figures 2A à 2F représentent différentes phases du fonctionnement du système de surveillance selon l'invention.
Les figures 3 à 5 montrent, sous forme de synoptique, les principales étapes de fonctionnement du système selon l'invention.
La figure 6 montre un diagramme de détection d'un système de surveillance selon l'invention dans un mode préféré de réalisation.

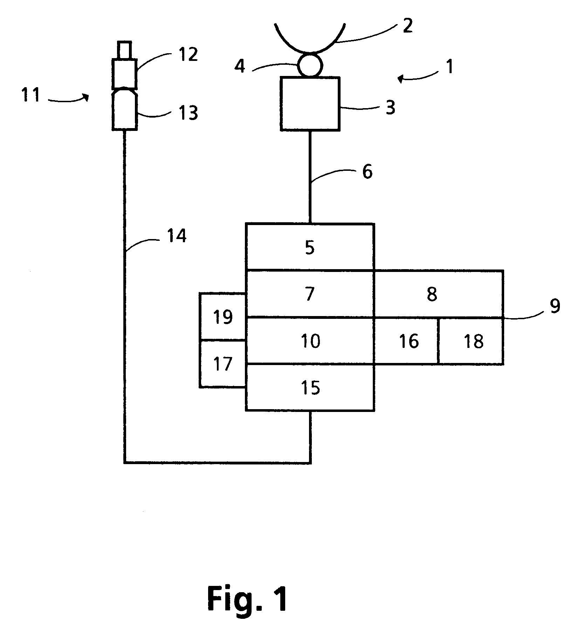

Le système automatique de surveillance représenté à la figure 1 comporte un dispositif radar 1 constitué principalement d'une tête radar 2 montée sur un châssis 3 et de moteurs 4, permettant l'orientation de la tête radar 2.

Le dispositif radar est raccordé à un contrôleur de tête radar 5 au moyen d'un ou plusieurs cables 6 propres à acheminer les signaux radar depuis la tête 2 vers le contrôleur 5 ou les commandes de fonctionnement (vitesse de rotation, inclinaison ...) depuis le contrôleur 5 vers la tête radar 2.

Les signaux radar sont transmis par le contrôleur 5 à un dispositif de traitement 7 propre notamment à éliminer les échos fixes et dont le fonctionnement sera décrit par la suite. Le dispositif de traitement 7 est relié, d'une part à un écran radar 8 d'une unité de visualisation 9, et d'autre part, à une unité centrale de commande 10 de moyens de prise de vue 11.

Ces moyens de prise de vue 11 comportent notamment une caméra 12 montée sur une tourelle 13 propre à en assurer la rotation et l'orientation en fonction des instructions reçues de l'unité centrale de commande 10 par l'intermédiaire d'un ou plusieurs câbles 14 et d'un contrôleur 15, des moyens de prise de vue propres également à acheminer les signaux vidéo des moyens de prise de vue 11 jusqu'à l'unité centrale de commande 10.

L'unité centrale de commande est, par ailleurs, reliée, d'une part à au moins un écran de visualisation 16 de l'unité de visualisation 9, et d'autre part, à une banque de donnée 17 contenant des formes pré-enregistrées de manière à permettre une identification automatique d'un objet détecté.

Selon un mode préféré de réalisation du système selon l'invention, le dispositif radar 1 et les moyens de prise de vue 10 comportent, en outre, une interface fibre optique 18, permettant la transmission des signaux par fibres optiques respectivement jusqu'au contrôleur de tête radar 5 et jusqu'au contrôleur de moyens de prise de vue 15.

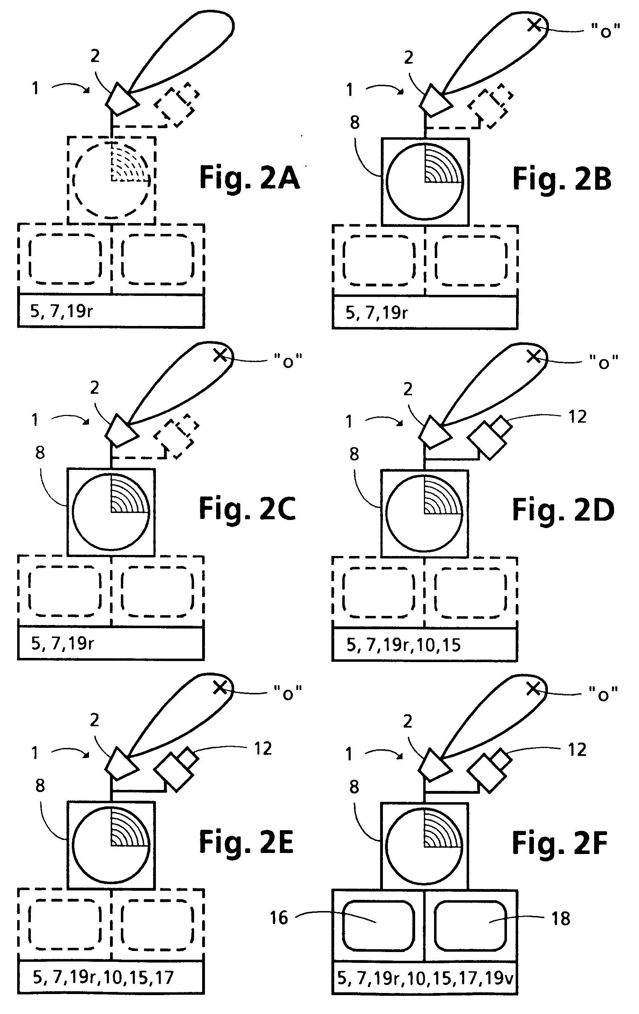

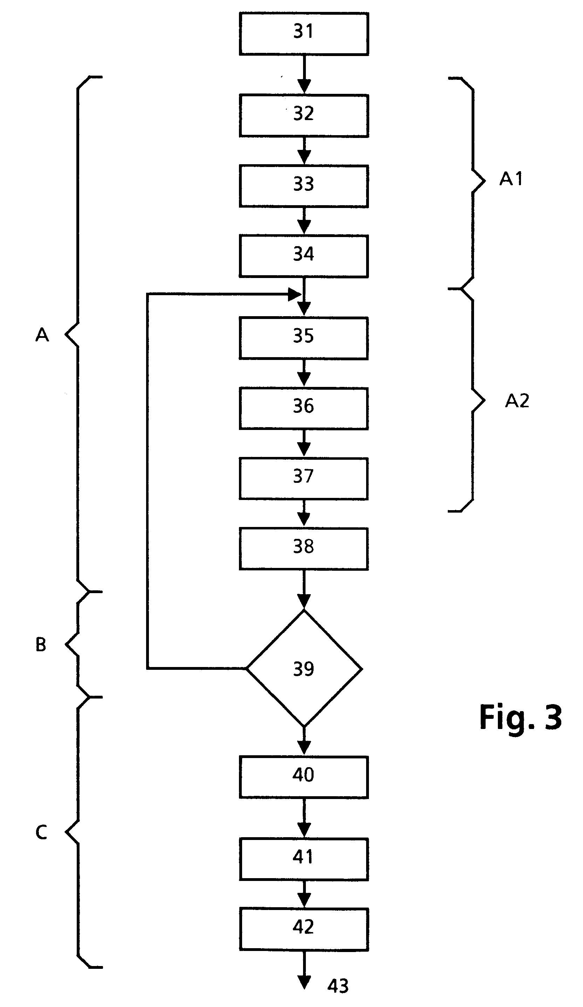

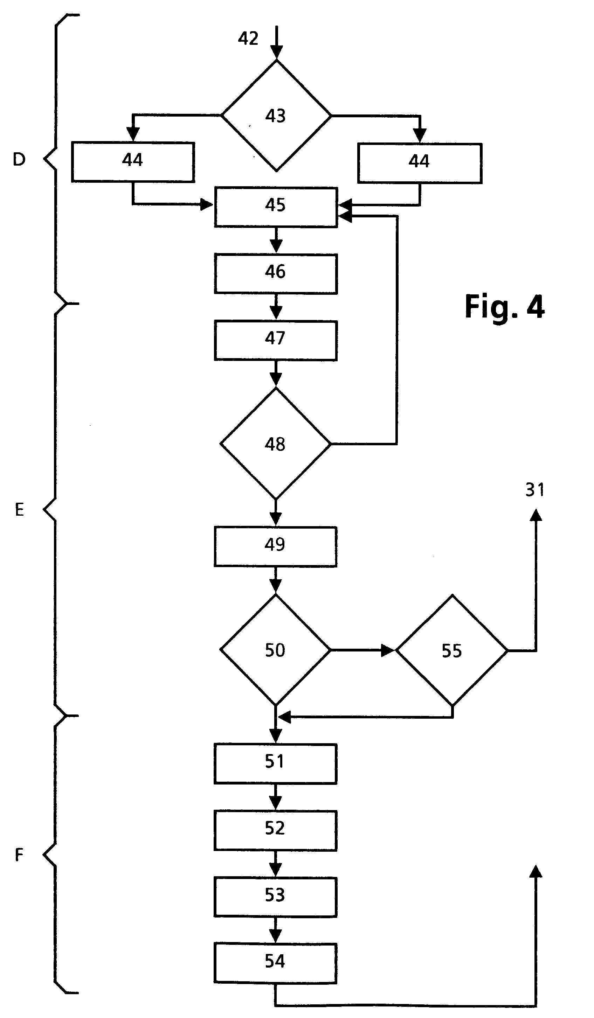

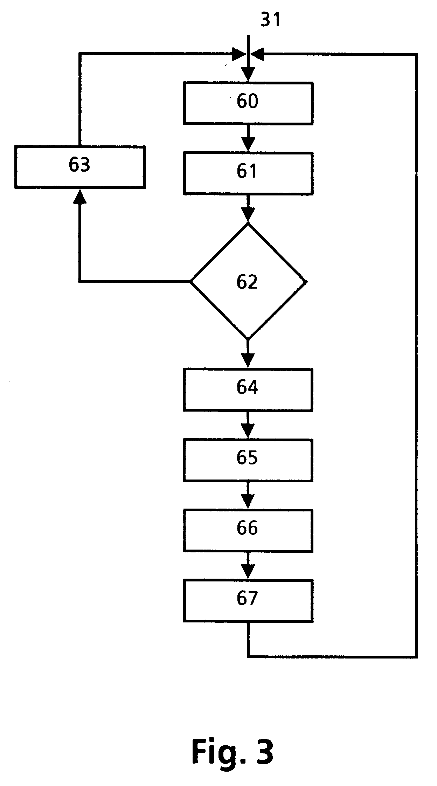

Le principe général de fonctionnement du système automatique de surveillance selon l'invention va maintenant être décrit à l'aide des figures 2A à 2F et des synoptiques des figures 3 à 5.

Les figures 2A à 2F, qui montrent différentes phases de fonctionnement du système, font apparaître en trait plein les principaux organes du système intervenant dans ces différentes phases.

Dans un état de veille (Fig. 2A), le dispositif radar 1 effectue un balayage de la zône de couverture, le dispositif de traitement 7 étant en fonction pour éliminer les échos fixes.

Dès qu'une forme mobile "0" est détectée, le système passe en mode détection (Fig 2B), et le dispositif transmet alors un plot sur l'écran radar 8. Le système passe alors en mode d'analyse (Fig. 2C) pour déclancher l'unité centrale 10 de commande des moyens de prise de vue en lui transmettant les coordonnées spatiales de l'objet détecté, faisant ainsi passer le système dans un mode d'orientation (Fig.2D).

Ce mode d'orientation permet de braquer la caméra 12 sur l'objet détecté en effectuant éventuellement un zoom sur l'objet "0" en fonction de son éloignement par rapport à la caméra 12. De plus, la focale de la caméra 12 est ajustée en fonction de la luminosité ambiante.

Une fois les moyens de prise de vue ajustés sur l'objet, le système verouille la caméra sur l'objet "0" de sorte à se placer en mode poursuite (fig. 2E), puis l'unité centrale de commande 10 effectue une comparaison morphologique de l'objet cible "0" avec des formes préenregistrées dans la banque de donnée 17 de sorte à permettre une identification de l'objet "0" pour éventuellement déclencher une alarme (Fig. 2F) et permettre la visualisation sur l'écran 16 des images issues des moyens de prise de vue.

La visualisation de l'objet sur l'écran 16 s'effectue, soit dès le passage en mode d'orientation, soit ultérieurement. On préfèrera généralement effectuer cette visualisation après identification de la cible pour éviter des alarmes intempestives qui nuisent à l'attention d'un opérateur chargé de réagir à l'apparition d'une alarme.

Les synoptiques des figures 3 à 5 montrent les étapes principales du traitement automatique effectué par le système.

Lors de la mise en route 31 du système, celui-ci se trouve en mode de surveillance A, et le contrôleur radar 5 fait effectuer à la tête radar 2 un balayage de la zône de couverture. Cette première acquisition radar 32, lors d'un premier tour de parabole A1, peut être affichée 33 sur l'écran radar 8, mais est également mise en mémoire 34 dans une unité mémoire radar 19r sous la forme d'une première image radar par le dispositif de traitement 7. La tête radar effectue alors un deuxième tour de parabole A2 et le système réalise une deuxième acquisition radar 35, éventuellement l'affichage 36 sur le même écran radar 8 ou sur un deuxième écran radar non représenté de la deuxième image radar, et une mise en mémoire 37 dans l'unité 19r de la deuxième image radar.

Le dispositif de traitement effectue alors une soustraction 38 des deux images radar mises en mémoire pour déterminer 39 la présence ou non d'échos mobiles.

Si aucun écho mobile n'est présent à l'issue de cette comparaison, la tête radar effectue une nouvelle acquisition radar 35 en effectuant un troisième tour de parabole suivant, et cette troisième image radar est alors soustraite 38 à la deuxième image radar.

Le système reste dans ce mode de surveillance A, tant qu'un écho mobile n'est pas détecté en comparant l'image radar du balayage courant avec l'image radar du balayage précédent.

Pour limiter la taille de mémoire nécessaire, le contenu de la deuxième mémoire est transféré dans la première mémoire à l'issue de chaque comparaison pour libérer la deuxième mémoire qui peut ainsi recevoir l'image suivante.

Si un écho mobile est détecté, le système passe alors en mode détection B et le, ou les, échos mobiles sont affichés 40 sur l'écran radar 8.

En mode d'analyse C, le dispositif de traitement 7 effectue le calcul 41 de la vitesse de la direction et de la distance de la cible, et la traduction 42 de ces paramètres en trajectoire des moteurs de la tourelle 13 des moyens de prise de vue 11.

En déclenchant l'unité centrale 10 de commande des moyens de prise de vue, le dispositif de traitement 7 fait passer le système en mode d'orientation D.

L'unité centrale 10 détermine alors 43, en fonction soit des premiers signaux de la caméra 12, soit de données de luminosité d'un capteur indépendant, si l'on se trouve en présence de jour ou d'obscurité pour régler 44 la caméra en fonction de la luminosité.

Ce réglage 44 peut consister, en fonction du mode de réalisation du système et plus particulièrement du type de moyen de prise de vue installé, soit en une modification du diaphragme d'une caméra unique, soit en un pivotement d'une caméra bi-objectifs pour placer l'objectif diurne ou nocturne en direction de la cible, soit en un choix entre une caméra diurne ou nocturne pour un système équipé de deux caméras et en un pivotement si ces deux caméras sont sur la même tourelle 13.

Le système effectue alors le braquage 45 de la caméra sur la cible et un ajustement mécanique 46 de la caméra en fonction des paramètres (coordonnées X, Y, Z ; focale, diaphragme) en fonction des informations transmises par le dispositif de traitement 7.

En passant en mode poursuite E, le système effectue un recadrage vidéo 47 automatique de la cible, soit en utilisant un traitement numérique d'image pour analyser les déplacements de la cible seulement sur la base des signaux vidéo des moyens de prise de vue, soit en faisant également appel aux coordonnées transmises en permanence par le radar. Si la cible est perdue 48 par les moyens de prise de vue, l'appel aux coordonnées radar s'effectue dans tous les cas en repassant à l'étape 35..

L'unité centrale de commande 10 réalise également une comparaison morphologique 49 de la cible avec le contenu de la banque de données 17 pour permettre une identification de la cible.

En fonction de cette comparaison, le système détermine 50, s'il y a eu ou non identification de la cible. Si l' identification n'a pu être effectuée, par exemple, si la forme ne fait pas partie des formes préenregistrées, le système passe en mode alarme (F), il déclenche une alarme 51 et transmet à l'affichage 52, si ce n'a pas été fait plus tôt, l'image sur l'écran 16 en même temps que des données relatives à la distance, la taille, la vitesse, la direction de la cible. On peut également prévoir que ces données soient affichées sur un deuxième écran 18.

Le système peut effectuer pour archivage une mémorisation 53 de l'image, issue des moyens de prise de vue dans une unité mémoire vidéo 19v, et également un comptage 54 du nombre d'objets, si plusieurs échos mobiles ont été détectés. Ce nombre est alors également transmis à l'opérateur par affichage.

L'opérateur détermine alors la réponse à donner à l'alarme. Il peut également mettre à jour la banque de données 17 en y incorporant la forme détectée pour des détections ultérieures.

Si l'identification a pu être réalisée par la comparaison morphologique, le système détermine 55 toujours en fonction de ce dont il dispose dans la banque de données (par exemple, chaque forme préenregistrée étant assortie d'un code indique le niveau de danger qu'elle représente), si la cible mérite le déclanchement d'une alarme ou pas.

Si oui, le système passe en mode alarme (F) à l'étape 51 (alarme). Dans ce cas, l'affichage 52 comporte des données relatives à l'indentification, et peut par exemple, sur le deuxième écran 18, également comporter la forme issue de la banque de données pour contrôle par l'opérateur.

Si non, il s'agit d'une fausse alarme, et le système revient en mode de surveillance A.

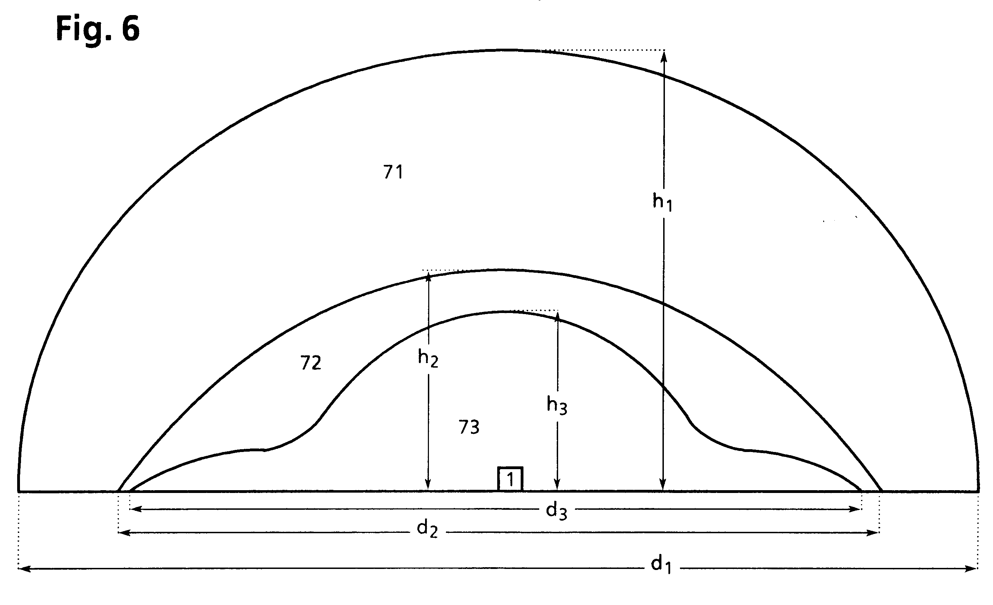

Dans un mode de fonctionnement particulier où le radar est inactif, le système peut effectuer une surveillance au moyen des moyens de prise de vue 11. Le synoptique correspondante est représentée à la figure 5.

Après la mise en route 31 du système, la caméra 12 effectue un balayage 60 de la zône à surveiller en direction horizontale, le système effectue alors la mémorisation 61 de l'histogramme des images transmises, et la comparaison 62 de cet histogramme avec un histogramme stocké dans la banque de données 17 et correspondant à l'image de la zône de couverture ne comportant que les éléments fixés à demeure (bâtiment, plantations ...).

Si le résultat de la comparaison 62 ne conduit à aucun élément supplémentaire, le système fait effectuer à la caméra un décalage 63 en direction verticale et un autre balayage horizontal (60) de la zône à surveiller, de sorte que l'espace de cette zône est découpé en tranches horizontales d'une hauteur correspondant au champ de la caméra dans la direction verticale.

Si le résultat de la comparaison conduit à la présence d'un objet supplémentaire, le système déclenche une alarme 64, l'affichage 65 sur écran, le stockage 66 et le comptage 67.

Le système retourne alors en un balayage 60 sur la même tranche de l'espace pour permettre ainsi de voir les déplacements du ou des objets.

On peut également prévoir qu'à l'issue de la comparaison 62, le système se place en mode de poursuite B, rejoignant alors le synoptique des figures 3 et 4 à l'étape 47.

La figure 6 montre un diagramme de détection d'un système selon l'invention, découpé en zône de détection en fonction de la signature radar des objets.

Une première zône "éloignée" 71 correspond à la zône dans laquelle sont détectés les objets de signature radar importante (avions de ligne, par exemple).

Une deuzième zône "médiane" 72 correspond à la zône dans laquelle sont détectés les objets de signature normale (avions de tourisme ...).

Et, une troisième zône "de proximité" 73 correspond à la zône dans laquelle sont détectés les objets de faible signature (planeurs, parachutistes ....).

En fonction de l'application souhaitée, le système selon l'invention peut être paramètré pour ne se placer en mode d'orientation que sur une ou plusieurs zônes sensibles, en considérant que les objets détectés dans la ou les autres zônes ne constituent pas de danger, tant qu'ils n'entrent pas dans la ou les zônes sensibles.

Ces zônes peuvent être définies par leur diamètre au sol "d1, d2, d3" et leur hauteur maximale "h1, h2, h3".

Selon un exemple préféré de réalisation d'un système selon l'invention faisant appel à un radar de fréquence comprise entre 9,75 et 10 GHz, le système passe en mode détection sur la zône de proximité d'un diamètre au sol d3 de 20 km et d'une hauteur h3 de 3 km.
e

## Revendications

1. Système automatique de surveillance d'un espace aérien à proximité d'un site terrestre, caractérisé en ce qu'il comporte :
- un dispositif radar (1) associé à un dispositif de traitement (7) propre à éliminer les échos fixes par comparaison de la position des échos détectés lors d'un balayage courant par rapport à leur position lors d'un balayage précédent ;
- des moyens de prise de vue (1) mobiles en rotation et en inclinaison commandés par une unité centrale de commande (10) en fonction des informations délivrées par le dispositif de traitement (7) pour assurer un suivi image d'une forme mobile détectée par le dispositif radar (1).

2. Système automatique de surveillance selon la revendication 1, caractérisé en ce que l'unité centrale de commande (10) comporte un dispositif de reconnaissance de formes (10a), propre à comparer les images issues des moyens de prise de vue (1) par rapport à des formes préenregistrées dans une banque de données (17) de manière à effectuer une identification automatique de la forme détectée.

3. Système automatique de surveillance selon la revendication 1 ou 2, caractérisé en ce qu'il comporte une unité de visualisation (9) comprenant au moins un premier écran radar (8) et au moins un premier écran de visualisation (16) des images issues desdit moyens de prise de vue (11).

4. Système automatique de surveillance selon l'une quelconque des revendications 1 à 3, caractérisé en ce que ledit dispositif de traitement (7) comporte de moyens propres à déterminer les coordonnées spatiales d'un écho mobile détecté ainsi que des informations relatives à sa vitesse, sa direction.

5. Système automatique de surveillance selon l'une quelconque des revendications 1 à 4, caractérisé en ce que ledit dispositif radar (1) comporte une tête radar (2) du type DOPPLER émettant une onde continue modulée en fréquence, montée sur un châssis (3), au moins un moteur (4) permettant l'orientation de ladite tête (2).

6. Système automatique de surveillance selon l'une quelconque des revendications 1 à 5, caractérisé en ce que ledit dispositif radar (1) émet dans une bande de fréquence détectant la présence d'eau.

7. Système automatique de surveillance selon l'une quelconque des revendications 1 à 6 car en ce que ledit dispositif radar (1) émet dans une bande de fréquence comprise entre 9,75 à 10 GHz.

8. Système automatique de surveillance selon l'une quelconque des revendications 1 à 7, car en ce que la puissance du dispositif radar (1) est choisie pour que le lobe d'émission présente un diamètre au sol compris entre 1 et 20 km et une hauteur maximale comprise entre 1 et 5 km.

9. Système automatique de surveillance selon l'une quelconque des revendications 1 à 8 car en ce que ledit dispositif radar (1) et/ou lesdits moyens de prise de vue (11) sont en liaison respective avec un contrôleur de tête radar (5) et un contrôleur de moyens de prise de vue (15) par l'intermédiaire d'au moins un câble (16) à fibres optiques et comportent, à cet effet, une interface fibre optique.

10. Procédé automatique de commande d'un système selon l'une quelconque des revendications 1 à 9 caractérisé en ce qu'il consiste :
- dans un mode de surveillance (A) à comparer par soustraction (38) des images radar, les signaux radar issus d'un premier balayage précédent (32) mémorisés (34) aux signaux radar issus d'un deuxième balayage courant (35) également mémorisés (37) jusqu'à l'apparition d'un ou plusieurs échos mobiles ;
- dans un mode de détection (B), à afficher (40), le ou les échos mobiles sur ledit écran radar (8)..
- dans un mode d'analyse (C), à déterminer (41) des informations relatives à la distance, la vitesse et la direction du ou des objets détectés et à traduire (42) ces informations pour la commande des moyens de prise de vue 10 ;
- dans un mode d'orientation (D), à diriger (45) l'objectif de la caméra (12) vers l'objet détecté
- dans un mode de poursuite (E), à effectuer un recadrage vidéo (47) de l'objet pour un suivi automatique et à comparer (49) morphologiquement l'objet détecté avec des formes préenregistrées dans ladite banque de données (17) en vue d'identifier l'objet.
- dans un mode alarme (F), à avertir un opérateur.

11. Procédé automatique de commande selon la revendication 10, caractérisé en ce qu'il consiste dans ledit mode d'orientation (D) à analyser (43) la luminosité ambiante en fonction d'informations délivrées par ladite caméra (12) ou par un capteur.

12. Procédé automatique de commande selon la revendication 11, caractérisé en ce qu'il consiste dans ledit mode d'orientation (D) à sélectionner en fonction de la lumière ambiante la caméra et/ou l'objectif à orienter et/ou à en ajuster le diaphragme.

13. Procédé automatique de commande selon l'une quelconque des revendications 10 à 12, caractérisé en ce qu'il consiste dans ledit mode d'orientation (D) à effectuer un zoom (46) sur l'objet détecté.

14. Procédé automatique de commande selon l'une quelconque des revendications 10 à 13 caractérisé en ce qu'il consiste dans ledit mode de poursuite (E), à replacer le système en mode d'orientation (D) en fonction de nouvelles informations transmises par le dispositif radar (1), au cas où l'objet aurait été perdu lors de la poursuite.

15. Procédé automatique de commande selon l'une quelconque des revendications 10 à 14, caractérisé en ce qu'il consiste dans ledit mode alarme (F) à afficher (52) sur ledit premier écran de visualisation (16), l'image issue desdits moyens de prise de vue.

16. Procédé automatique de commande selon l'une quelconque des revendications 10 à 15, caractérisé en ce qu'il consiste dans ledit mode d'alarme (F) à afficher sur ledit premier écran de visualisation (16) des données relatives à l'identification, la distance, la taille, la vitesse et la direction de l'objet détecté.

17. Procédé automatique de commande selon l'une quelconque des revendications 10 à 16, caractérisé en ce qu'il consiste, dans ledit mode d'alarme (F), à afficher sur un deuxième écran de visualisation (18) une image correspondant à l'identification réalisée et issue de ladite banque de données (17).

18. Procédé automatique de commande selon l'une quelconque des renvendications 10 à 17 caractérisé en ce qu'il consiste, dans ledit mode d'alarme (F), à effectuer un comptage (54) du nombre d'objet détecté.

19. Procédé automatique de commande d'un système selon l'une quelconque des revendications 1 à 9, car en ce qu'il consiste :
- à effectuer un balayage horizontal (60) à l'aide des moyens de prise de vue (10) dans une première tranche verticale de l'espace à surveiller ;
- à comparer (62) l'histogramme obtenu par rapport à un histogramme préenregistré ;
- à effectuer un balayage horizontal (60) dans une autre tranche verticale, tant que le résultat de la comparaison (62) ne fait apparaître aucun objet supplémentaire ;
- dès qu'un élément supplémentaire apparaît, à déclencher une alarme (64), à visualiser sur l'écran (16), et à placer le système dans un mode de poursuite automatique (E) de l'objet détecté.
